# EUROPEAN PATENT APPLICATION

(11) **EP 0 726 670 A2**
(43) Date of publication of application: **14.08.1996**
(21) Application number: 96850024.9
(22) Date of filing: 08.02.1996
(51) Int. Cl.: H04M 15/00

(54) **Call metering equipment in a switched telecommunication network**

(30) Priority: 09.02.1995 SE 9500504
(71) Applicant: TELIA AB, S-126 86 Farsta (SE)
(72) Inventor: Ohlsson, Hans, S-135 55 Tyresö (SE); Hagström, Svante, S-135 49 Tyresö (SE)
(74) Representative: Karlsson, Berne

(57) **Abstract**

Switched telecommunications network (3), which has a number of subscriber nodes (2). These are arranged in a way that a transmission path can be established between any pair of the in the network existing subscriber nodes. The telecommunications network further includes a call metering equipment (4) arranged to monitor the telecommunications traffic going out from each subscriber node and register a fee which shall be debited each subscriber node, at which the fee depends on the length of a call and a service depending fixed fee. Further is in the network an existing call answer equipment (15) included, which gives the calling subscriber information about the total cost of the call, if accepted, and a connection device (6) which, after a certain time, connects the call to the call metering equipment at which debiting also is executed the called part depending on the lenght of the call.

## Description

### TECHNICAL FIELD

Switched telecommunications network which has a number of subscriber nodes and is arranged in a way that a transmission path can be established between any pair of subscriber nodes, at which the telecommunications network includes a call metering equipment arranged to monitor the telecommunications traffic going out from each subscriber node and register a fee which shall be debited each subscriber node, at which the fee depends on the length of the call and a service depending fixed fee.

### PRIOR ART

The public telephone network offers among other things the service telephony, which beside call communication (in the frequency range 300-3400 Hz) can include various services such as: Automatic callback, automatic forwarding of call, alternation on inquiry etc. Direct number with monitoring possibilities, group number connection, inquiry call/three-party conference are further examples. These extra services are available for AXE-connected subscribers and are passed under a common name of "plus-services". Some of them are available without extra charge. In 1989 the 071-line was introduced which was a new telephone service giving opportunity to sell information via telephone. The calling part pays for the information and the use of the telecommunications network by unit charge marking.

However, various complaints have been made against this telephone service resulting in a new technical solution which has made it possible to supply this service in a more flexible way.

### DESCRIPTION OF THE INVENTION

### TECHNICAL PROBLEM

The aim with the invention is to achieve one in relation to the prior art improved and simplified public telephone communications network which makes it possible for different kinds of customers to transfer information and data in an efficient way.

The problem is to implement a new service in the present network and, from a technical point of view, to realize this in a way that the capacity is provided for in an optimal way on existing equipment in the network.

Further the load on the devices in the network which controls the call metering, and execute this, shall be reduced in a way that the capacity can be provided for at increased volume.

### THE SOLUTION

The above mentioned aims are achieved by the invention showing the in the enclosed patent claims presented characteristics.

What in the main characterizes the invention is that the network is a switched telecommunications network which has a number of subscriber nodes. These are arranged in a way that a transmission path can be established between any existing pair of subscriber nodes in the network. The telecommunications network further includes a call metering equipment arranged to monitor the telecommunications traffic going out from each subscriber node and to register a fee which shall be debited each subscriber node, at which the fee depends on the length of a call and a service depending fixed fee. Further is included one in the network existing answer equipment which informs a calling subscriber about the total cost for the call, in case of acceptance, and a connection device which connects the call, after a certain time, to the call metering equipment at which call debiting is executed depending on the length of the call.

According to a special aspect of the invention the subscriber node which registers the calling part cost can be activated by the calling part activating one at the telephone or in the telephone existing control device such as a telephone key or the like.

According to a second aspect of the invention the called part will be debited a fee via his/her registered subscriber node after a certain predetermined time and the network is a public switched telecommunications network which is accessible to the public.

### ADVANTAGES

By the invention a number of advantages are achieved. In the first place a safe and reliable system for charging the customers for the use of the telecommunications network is obtained which means that one avoids unnecessary load, implying a warped cost distribution for the use. Further the invention implies that the load on the call metering equipment existing in the network is reduced. Another advantage is that the utilization of the network to some extent is optimized.

### DESCRIPTION OF FIGURES

The invention will now be described by not restricted examples of embodiment and with reference to enclosed, schematically performed drawings. In the drawing is shown;

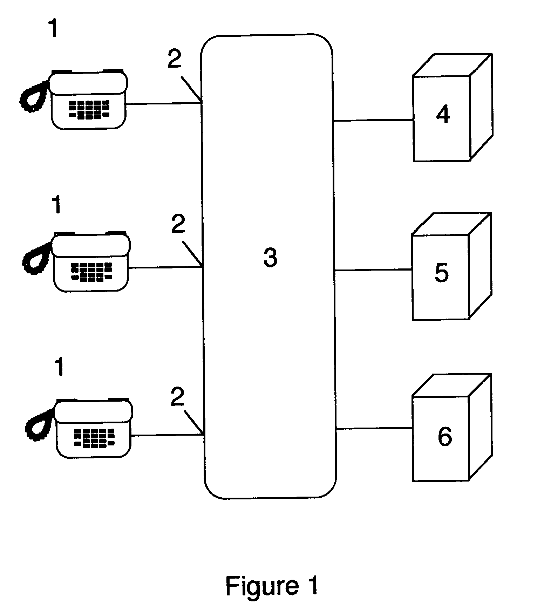

Figure 1 a switched telecommunications network according to the invention.

### DETAILED DESCRIPTION

The figure shows a number of subscribers having telephone equipment 1 such as for instance telephone, computer or the like connected via a signal line and subscriber nodes 2 to a public switched telecommunications network (PSTN) 3. The public telecommunications network is also equipped with a call metering equipment 4, answer equipment 5 and connection device 6.

The call metering equipment 4 is arranged to receive signals from the public telecommunications network which indicate the lenght of a telephone call or other use of the telecommunications network and translate this into a fee and charge this fee the account of a suitable subscriber.

The call answer equipment 5 is arranged to be connected to a certain subscriber line to constitute an intermediate step before a call is connected to wished subscriber. The call answer equipment is designed according to known technology. Other equivalent call answer equipments are possible to use, such as displays etc.

Further, the network includes a connection device 6 which cooperates with the call answer equipment and the call metering equipment. The connection device is adjustable to activate, after a certain time, the call metering equipment and translate the signals which pass between two subscribers into a cost. The device is also designed to allow different connection times for different subscribers which can be performed by means of computer programs.

According to a preferred embodiment of the invention the network is a public switched telecommunications network 3 which has a number of subscriber nodes 2 which are arranged in the network in a way that a transmission path or call path between any of the subscriber nodes 2 can be achieved.

When a subscriber wants to provide a service via the telecommunications network he/she gets in touch with his/her telecommunications operator and informs him/her (at the utilization of this service) that he/she wants a fixed cost for supplying the service. The service seller then agrees with the operator of a suitable time limit during which this cost shall be valid. The operator then adjusts the call answer equipment in a way that the calls which go to this subscriber pass through this equipment and provide the equipment with suitable message. Further the operator adjusts the connection device to the agreed time making the call metering equipment being automatically connected when the selected time limit has passed, at which the fee is debited the service seller. The operator consequently does not burden his/her call metering equipment during this time.

The telecommunications network according to the invention further includes a call answer equipment which gives a calling part information of the total cost of the call which is debited him/her. The calling part has to decide whether he/she will make use of the offered service and thus accept this cost for the call being connected.

The permission that he/she accepts that the call shall be connected is made by him/her by pressing or in any other way touching one or more keys on the telephone. Another possibility is that he/she actuates a control device connected to the telephone.

The existing call metering device in the network is variably adjustable making different price models constituting a base for the fee debited by the one who provides services via the network.

The invention is not restricted to the shown examples of embodiment but may be varied in just any way within the frame of the idea of invention, as it is defined by the following patent claims.

## Claims

1. Switched telecommunications network which has a number of subscriber nodes and is arranged in a way that a transmission path can be established between any pair of subscriber nodes, at which the telecommunications network includes call metering equipment to monitor the telecommunications traffic going out from each subscriber node and register a fee which shall be debited each subscriber node, at which the fee depends on the length of a call and a service depending fixed fee, **characterized** in that one in the network existing answer equipment gives a calling subscriber information about the total cost of the call, if accepted, and a connection device which connects the call, after a certain time, to the call metering equipment at which debiting is also executed the called part depending on the length of the call.

2. Switched telecommunications network according to patent claim 1, **characterized** in that the subscriber node which registers the cost of the calling part becomes activated by the calling part activating one at the telephone or in the telephone existing control device such as a key or the like.

3. Switched telecommunications network according to patent claim 1, **characterized** in that the called part is debited a fee via his/her registering subscriber node after a certain predetermined time.

4. Switched telecommunications network according to any of the following patent claims,
**characterized** in that the network is a public connected telecommunications network to which the public has access.

5. Switched telecommunications network according to any of the following patent claims,
**characterized** in that the connection device can by program be set to a certain time.

6. Switched telecommunications network according to any of the following patent claims,
**characterized** in that the signal indicating debiting equipment can by program be set by means of mathematical price functions.
